Europäisches Patentamt

(19) European Patent Office

Office européen des brevets

(11) Numéro de publication : **0 011 187**
**B1**

(12) FASCICULE DE BREVET EUROPÉEN

(45) Date de publication du fascicule du brevet :
16.02.83

(21) Numéro de dépôt : 79104247.6

(22) Date de dépôt : 31.10.79

(51) Int. Cl.³ : **F 16 L 27/02, F 16 L 27/10**

(54) **Joint verrouillé à emboîtement.**

(30) Priorité : 13.11.78 FR 7831994

(43) Date de publication de la demande :
28.05.80 Bulletin 80/11

(45) Mention de la délivrance du brevet :
16.02.83 Bulletin 83/07

(84) Etats contractants désignés :
**AT BE DE GB IT NL**

(56) Documents cités :
**DE A 2 701 022**
**FR A 2 159 581**
**FR A 2 166 593**
**FR A 2 208 081**
**FR A 2 214 078**
**FR A 2 304 018**

(73) Titulaire : **PONT-A-MOUSSON S.A.**
**91, Avenue de la Libération**
**F-54017 Nancy (FR)**

(72) Inventeur : **Pierrel, Michel**
**3 rue du Président Coty**
**F-54700 Blenod-les Pont-à-Mousson (FR)**
Inventeur : **Vitel, Jean-Pierre**
**83 avenue de la Petite Suisse**
**F-54700 Blenod-les Pont-à-Mousson (FR)**

(74) Mandataire : **Weil, Roger et al**
**c/o Centre de Recherches de Pont-à-Mousson BP 28**
**F-54700 Pont-à-Mousson (FR)**

Joint verrouillé à emboîtement

La présente invention relative aux joints verrouillés à bout mâle et emboîtement entre deux tuyaux pouvant présenter une déviation l'un par rapport à l'autre. Elle s'applique aux canalisations de grands diamètres posées en tranchées, destinées à véhiculer un fluide sous pression élevée, et pour lesquelles une déviation faible et aléatoire est pratiquement inévitable. Elle concerne des joints présentant des surfaces d'appui en regard, respectivement sur le bout mâle un jonc fendu enserrant le bout mâle et appliquée contre un épaulement radial, — et sur l'emboîtement, une collerette intérieure. Entre ces surfaces d'appui, des moyens d'entretoisement comprenant une masse incompressible et déformable sont capables de transmettre les efforts de déboîtement sur toute la périphérie du joint.

Les brevets FR-A 2 159 581 et FR-A 2 304 018 montrent des joints de ce type où la masse incompressible occupe tout l'espace ouvert disponible dans la cavité de l'emboîtement, et consiste en une matière initialement liquide mais durcissable, donc indéformable après durcissement, en vue d'arrêter l'écoulement hors de l'espace ouvert. Le brevet FR-A 2 214 078 montre un joint verrouillé à espace annulaire fermé par deux bagues d'étanchéité élastiques. L'espace est empli d'une résine synthétique thermodurcissable initialement liquide qui, durcie, rigidifie le joint, le verrouille, interdit l'expulsion d'une bague d'étanchéité et interdit toute déviation angulaire. En variante, une manchette élastique mince appliquée sur le bout mâle et reliant les deux bagues élastiques permet une légère déviation angulaire ainsi qu'une mobilité axiale du bout mâle dans l'emboîtement mais supprime le verrouillage axial du joint.

La présente invention a pour but de remédier à ces inconvénients. L'invention, telle qu'elle est caractérisée dans les revendications, a pour objet un joint verrouillé à emboîtement entre deux tuyaux pouvant présenter une déviation l'un par rapport à l'autre, dans lequel le bout mâle et l'emboîtement présentent des surfaces d'appui respectives en regard, entre lesquelles sont disposés des moyens d'entretoisement capables de transmettre les efforts de déboîtement sur toute la périphérie du joint et comprenant une masse incompressible et déformable, la surface d'appui de l'emboîtement étant définie par une collerette intérieure de celui-ci, et celle du bout mâle par un jonc annulaire fendu enserrant ce bout mâle et appliqué contre un épaulement radial de celui-ci, ce joint étant caractérisé en ce que la masse incompressible et déformable est une masse de billes contenue dans un espace fermé de tous côtés de façon étanche à ladite matière par des organes annulaires comportant au moins une partie annulaire en protubérance radiale par rapport au jonc annulaire fendu de verrouillage, ladite partie en protubérance radiale étant située entre les deux surfaces d'appui.

L'invention résout ainsi le problème d'économiser la matière de remplissage et aussi de conserver le verrouillage axial avec de légères déviations angulaires et de répartir des efforts considérables de déverrouillage sur tout le pourtour du joint.

Les avantages obtenus grâce à cette invention consistent essentiellement en ce que la masse déformable de billes a un volume sensiblement inférieur à celui de la masse de résine thermodurcissable précédemment utilisée dans des joints verrouillés présentant un emboîtement analogue, et que la masse déformable de billes permet des déviations angulaires du joint d'étanchéité verrouillé, après pose des tuyaux et assemblage du joint, du fait qu'elle est déformable, bien qu'elle soit composée de billes solides, et en ce que la masse déformable de billes répartit des efforts élevés de déboîtement, c'est-à-dire de recul du bout mâle, sur toute la périphérie de l'assemblage, en cas de mouvements du terrain.

Dans un premier mode de réalisation, lesdits organes annulaires comprennent une couronne à section en L coulissant avec un jeu radial dans l'ouverture de la collerette de l'emboîtement et dans le fond cylindrique de la cavité de cet emboîtement.

Dans un autre mode de réalisation, la surface d'appui du bout mâle est tronconique ou sphérique, et ledit espace est fermé du côté du jonc annulaire fendu par un anneau torique en appui sur ce jonc et sur le fond cylindrique de la cavité de l'emboîtement, tandis que, du côté de l'emboîtement, ledit espace peut être fermé soit par un profilé annulaire en U coiffant ladite collerette et éventuellement muni d'un remplissage, soit par un second anneau torique s'appuyant sur la surface extérieure du bout mâle et sur une partie tronconique, radialement intérieure de la surface d'appui de l'emboîtement.

D'autres caractéristiques et avantages apparaîtront au cours de la description.

Au dessin annexé, donné uniquement à titre d'exemple,

la Figure 1 est une demi-vue en coupe d'un joint verrouillé conforme à l'invention, les deux tuyaux étant parfaitement alignés,

la Figure 2 est une vue complète et à plus petite échelle de ce joint, les deux tuyaux étant dans leurs positions définitives,

la Figure 3 est une vue analogue à la Fig. 1 d'une variante du joint de cette Fig. 1,

la Figure 4 représente de façon analogue un autre mode de réalisation du joint verrouillé conforme à l'invention,

la Figure 5 montre une variante du joint de la Fig. 4.

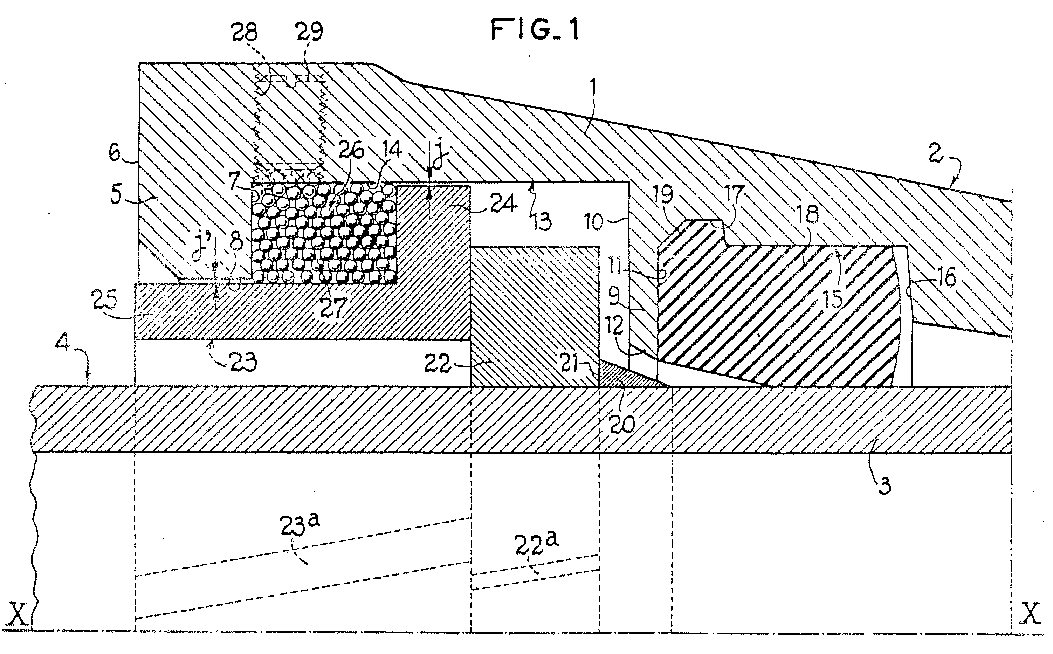

Le joint représenté à la Fig. 1, d'axe général X-X horizontal, réunit l'emboîtement 1 d'un premier tuyau 2 et le bout mâle 3 d'un deuxième tuyau 4 enfoncé dans l'emboîtement 1. Les tuyaux 2 et 4 ont un grand diamètre, par exemple 800 mm ou plus, et sont destinés à véhiculer un fluide sous haute pression, par exemple 10 bars.

L'emboîtement 1 présente à son entrée une collerette intérieure 5 délimitée par des parois radiales 6 et 7 et définissant une ouverture cylindrique centrale 8. La paroi extérieure 6 de cette collerette 5 est chanfreinée pour faciliter l'introduction du bout mâle 3 et des divers composants du joint. L'emboîtement 1 comporte également une seconde collerette intérieure 9 à parois radiales 10 et 11 délimitant un orifice 12 de diamètre nettement inférieur à l'orifice 8, la paroi de cet orifice 12 convergeant vers l'intérieur de l'emboîtement.

Entre les collerettes 5 et 9 est délimitée une première gorge 13 à fond cylindrique 14, tandis qu'au-delà de la collerette 9 est ménagée une seconde gorge 15 dont l'extrémité intérieure est définie par une paroi radiale 16. La gorge 15 présente une partie 17 de diamètre agrandi au voisinage de la collerette 9. L'étanchéité du joint est assurée par une garniture 18 à compression radiale présentant un talon 19 logé dans la partie 17 de la gorge 15.

Sur la périphérie du bout mâle 3, à une certaine distance de l'extrémité de celui-ci, est disposé un cordon de soudure 20 circulaire ou discontinu présentant une face radiale 21 tournée du côté opposé à l'extrémité du bout mâle. Le diamètre du cordon 20 est très inférieur à celui de l'orifice 8 de l'emboîtement 1 et, lorsque le bout mâle est en position enfoncée dans l'emboîtement, ce cordon de soudure se trouve à peu près en regard de la collerette 9 de ce dernier.

Le joint ainsi décrit est complété par un dispositif de verrouillage en traction constitué de deux organes annulaires rigides et d'une masse de remplissage incompressible. Le premier organe annulaire est un jonc fendu 22 à section carrée ou rectangulaire qui enserre le bout mâle 3 et prend appui contre la face 21 du cordon de soudure 20. Le diamètre extérieur de ce jonc 22 est nettement supérieur au diamètre d'entrée de l'emboîtement 1.

L'autre organe annulaire est constitué par une couronne 23 à section en L. La branche radiale ou talon 24 du L est intérieure à l'emboîtement et est délimitée par deux surfaces radiales annulaires dont l'une prend appui sur la face adjacente du jonc 22 ; l'extrémité libre de cette branche 24 coulisse avec un petit jeu radial *j* le long du fond cylindrique 14 de la gorge 13 de l'emboîtement. L'autre branche ou jupe 25 du L, perpendiculaire à la précédente, coulisse dans l'ouverture d'entrée 8 de l'emboîtement 1 avec un jeu radial *j'* du même ordre que le jeu *j*. Le diamètre intérieur de la branche 25 est supérieur au diamètre extérieur du cordon de soudure 20.

L'espace annulaire 26 de section à peu près rectangulaire ménagé entre les parois 7 et 14 de la gorge 13 d'une part, l'angle intérieur de la couronne 23 d'autre part, est rempli d'une matière 27 de type granulaire qui est introduite dans cet espace par l'intermédiaire d'un orifice radial taraudé 28 ménagé dans la paroi de l'emboîtement 1 au voisinage de la collerette 5 ; un bouchon fileté 29 peut être vissé dans l'orifice 28. Le diamètre des particules constituant la matière 27 est supérieur au double des jeux *j* et *j'*. La matière 27 peut notamment être constituée par de la grenaille ou, de préférence, comme représenté, par des billes d'acier d'un diamètre de quelques millimètres, par exemple de 5 à 6 mm.

La couronne 23 est fendue, et sa fente 23ᵃ est obturée, par exemple au moyen d'un cordon de soudure.

Le montage du joint de la Fig. 1 s'effectue de la manière suivante.

La garniture 18 étant en place dans son logement de l'emboîtement, on contracte radialement la couronne 23 jusqu'à ce que la branche 24 du L ait un diamètre suffisamment petit pour passer à travers l'orifice 8. Lorsque ce franchissement est effectué, on relâche la couronne 23, et on supprime la fente 23ᵃ, par exemple par soudure, pour faire de cette couronne une pièce continue sur toute la périphérie et ayant le diamètre désiré pour présenter les jeux radiaux *j* et *j'* mentionnés plus haut. Puis on introduit de la même façon le jonc fendu 22 dans la gorge 13, au-delà de la couronne 23, et on le met en extension radiale, en attente, cet état étant maintenu au moyen d'un coin (non représenté) introduit axialement dans sa fente 22ᵃ. Ces opérations peuvent être effectuées en usine au préalable.

Le bout mâle 3 s'introduit alors sans difficulté dans l'emboîtement, à travers les pièces 23 et 22. Lorsque le cordon de soudure 20 a dépassé le jonc 22, on retire le coin de maintien de celui-ci en extension, de sorte que ce jonc vient enserrer le bout mâle à une faible distance du cordon de soudure 20. Pendant son introduction, le bout mâle a comprimé radialement la garniture 18, assurant ainsi de façon automatique l'étanchéité du joint.

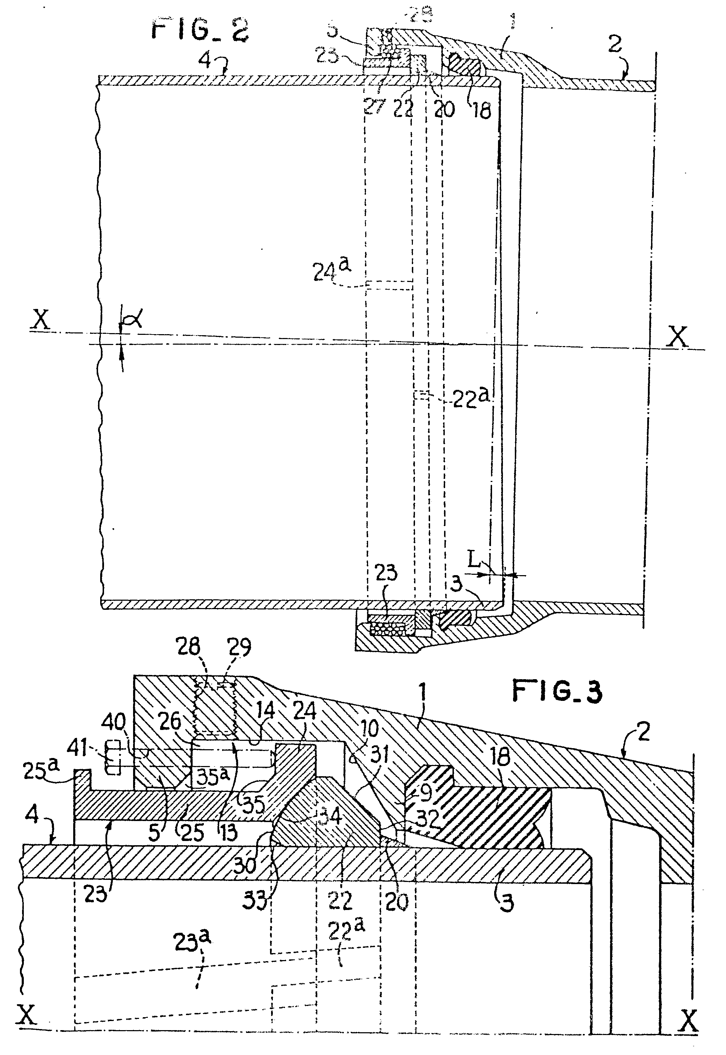

Ces opérations ont été effectuées avec un alignement parfait des deux tuyaux suivant l'axe X-X, de sorte que l'orientation des pièces est celle représentée en traits pleins à la Fig. 1. On imprime alors aux deux tuyaux la déviation projetée, ou bien leur laisse prendre la déviation qu'imposent les conditions pratiques du chantier de pose, par exemple la conformation imparfaite du fond de la tranchée où est posée la canalisation. Cette déviation provoque une intersection des axes des deux tuyaux dans le plan moyen de la garniture 18, comme représenté à la Fig. 2.

En pratique, la déviation α entre deux tuyaux successifs est très faible, de l'ordre par exemple de 1°30 au maximum, et donc à peu près imperceptible. Cependant, lorsque les tuyaux ont un grand diamètre, par exemple 1 600 mm, le décalage axial entre les parties du jonc 22 situées respectivement à l'extérieur et à l'intérieur de l'angle des deux tuyaux est L = 1 600 × tg 1°30 = 1 600 × 0,026 = 41,6 mm. Il en résulte une modification très sensible de la forme de l'espace 26 : d'annulaire, cet espace prend une configuration cunéiforme, comme représenté à la Fig. 2, la longueur axiale de l'espace 26 étant à l'intérieur de l'angle des tuyaux (en bas sur la Fig. 2) supérieure de près de 42 mm à cette longueur axiale à l'extérieur de cet angle (en haut sur la Fig. 2).

Lorsque les deux tuyaux sont dans leurs positions définitives, on remplit l'espace 26 de la matière granulaire 27, par exemple par injection sous pression à travers l'orifice 28 de l'emboîtement, et l'on effectue un bon tassement de cette matière, par exemple par des vibrations, les billes étant éventuellement lubrifiées au préalable dans le même but. Pendant ce remplissage, la matière 27 pousse la couronne 23 contre le jonc 22, de sorte que, à la fin de ce remplissage, la couronne 23 est coaxiale au bout mâle 3. Ce mouvement angulaire de la couronne 23 est permis par les jeux $j$ et $j'$, qui se modifient sur le pourtour du joint sans pouvoir doubler de valeur, et donc en restant toujours inférieurs au diamètre des billes de la matière de remplissage. On est ainsi assuré qu'aucune des billes ne pourra s'échapper de l'espace 26, ni vers l'intérieur de l'emboîtement ni vers l'extérieur. On rebouche enfin l'orifice de remplissage 28 au moyen du bouchon 29. Il est clair que lorsque, sous l'effet de la pression de service, le bout mâle 3 tendra à ressortir de l'emboîtement 1, les efforts de déboîtement seront transmis effectivement du cordon de soudure 20 à la collerette 5 sur toute la périphérie du joint par le jonc 22, la branche 24 de la couronne 23 et la matière 27.

La variante représentée à la Fig. 3 diffère de celle des Fig. 1 et 2 par la forme du jonc 22 et de la couronne 23.

Dans cette variante, la face d'appui que le jonc 22 offre à la couronne 23 est une surface bombée 30 de très grand rayon de courbure, donc très proche du tronc de cône. Par ailleurs, un pan coupé est introduit en 31, à l'intersection de la face cylindrique externe du jonc 22 avec la face radiale 32 d'appui contre le cordon de soudure 20, ce qui permet d'incliner la face adjacente 10 de la collerette 9 de l'emboîtement et, par suite, de raccourcir celui-ci en vue d'un gain de matière. Enfin, un chanfrein est ménagé en 33, à l'intersection de la face bombée 30 et de l'alésage interne du jonc, pour faciliter l'introduction du bout mâle. Ainsi, le jonc 22 a une section grossièrement triangulaire à angles abattus.

Par ailleurs, l'angle du L de la couronne 23 est abattu de façon à former une surface tronconique 34 d'appui sur la surface bombée 30 du jonc 22 ainsi qu'une petite surface tronconique 35 dans l'angle intérieur de la couronne. Pour assurer une longueur axiale constante de l'espace 26, une surface tronconique 35ª de même angle que la surface 35 est prévue dans le côté intérieur de la collerette 5 de l'emboîtement 1. L'angle d'inclinaison sur l'axe X-X des surfaces 34, 35 et 35ª est de l'ordre de 45°.

De plus, l'extrémité de la jupe 25 extérieure à l'emboîtement est pourvue d'une collerette radiale extérieure 25ª.

Dans l'ensemble, ce joint se montre de la même façon que celui de la Fig. 1. Cependant, grâce à la collerette 25ª, il est possible d'introduire en usine la couronne 23 dans l'emboîtement et, après fermeture de sa fente 23ª, de remplir l'espace annulaire 26 de matière granulaire (non représentée), ce remplissage s'effectuant alors que le talon 24 se trouve à peu près à mi-longueur de la gorge 13 de l'emboîtement. Après obturation de l'orifice de remplissage 28, on peut transporter le tuyau 2 sans risquer de voir les billes s'échapper de l'espace 26 ; pour éviter le rassemblement des billes dans la partie basse de l'emboîtement, on peut disposer des cales d'espacement (non représentées) entre les collerettes 5 et 25ª.

Lors du montage du joint de la Fig. 3, si l'espace 26 est pré-rempli comme décrit ci-dessus, il est souhaitable, une fois les deux tuyaux dans leur position angulaire relative définitive, d'aider la couronne 23 à basculer et les billes à se redistribuer, afin d'assurer un bon appui périphérique. Ceci peut s'effectuer en exerçant artificiellement un effort de déboîtement sur le bout mâle ; à cet effet, on peut utiliser un dispositif écarteur quelconque approprié tel que l'appareil décrit au brevet FR 2 263 443, éventuellement assisté d'un vibrateur.

En service, cette variante présente certains avantages dus à l'inclinaison des surfaces de contact 30 et 34 :

— la résultante des efforts de réaction est concentrée à l'intérieur du cordon de soudure 20, ce qui supprime ou réduit la tendance du jonc 22 à basculer par-dessus ce cordon 20 en direction de la pointe du bout mâle ; cependant, l'inclinaison importante indiquée exclut tout risque d'éclatement de l'emboîtement ou d'écrasement radial du bout mâle aux pressions élevées ;

— l'inclinaison des faces d'appui 30-34 a tendance à repousser la couronne 23 dans l'angle formé par les parois 7 et 14 de la gorge 13 de l'emboîtement, ce qui est favorable à la fermeture étanche aux billes de l'espace 26 ;

— l'inclinaison des faces d'appui 30 et 34 permet de faire absorber une certaine partie de la déviation par un glissement relatif de ces deux faces, ce qui permet de réduire à son tour la longueur de l'espace 26, donc celle de l'emboîtement. De plus, les jeux $j$ et $j'$ peuvent être réduits, ainsi par conséquent que le diamètre des billes ou analogues constituant la matière 27.

On peut aussi, suivant une variante non représentée, associer une couronne à L anguleux selon la Fig. 1 à un jonc 22 à peu près hexagonal selon la Fig. 3.

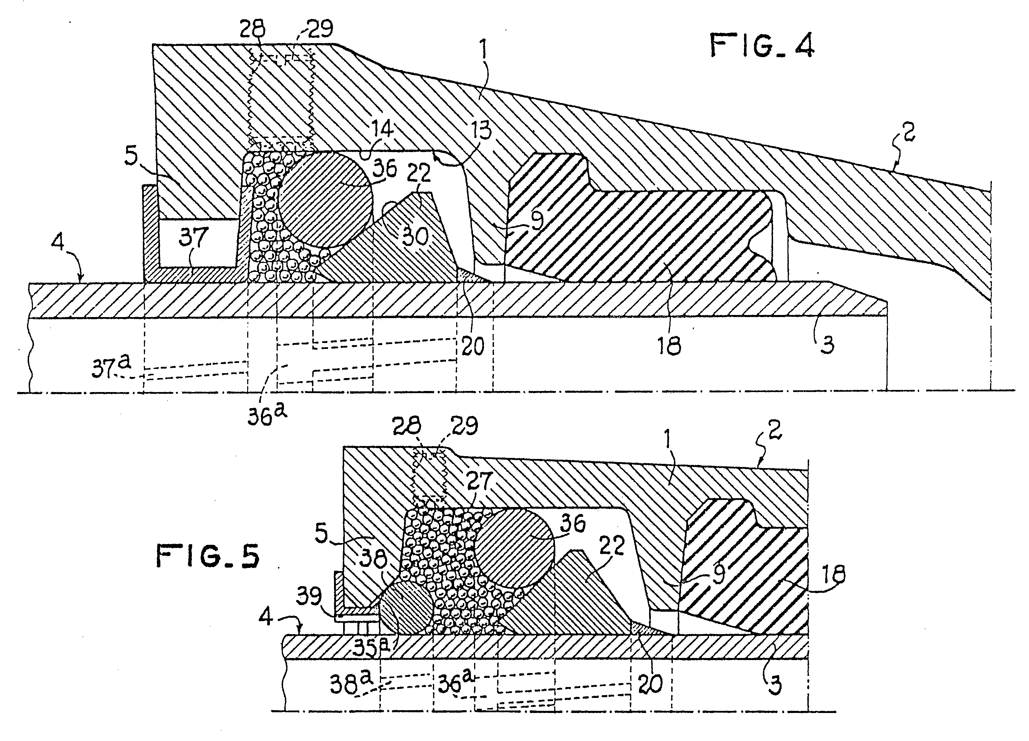

Les Fig. 4 et 5 montrent un autre mode de fermeture de l'espace 26. Sur ces figures, le jonc 22 est le même qu'à la Fig. 3, bien que sa surface d'appui 30 puisse être tronconique au lieu de sphérique, mais la couronne 23 est remplacée par un autre dispositif. Dans les deux cas, un tore 36 ferme l'espace 26 du côté intérieur de l'emboîtement 1 en prenant appui contre la face 30 du jonc 22 et contre le fond 14 de la gorge 13 de l'emboîtement.

Dans la variante de la Fig. 4, du côté de l'extrémité ouverte de l'emboîtement, l'espace 26 est fermé par un profilé annulaire 37 en U qui enserre le bout mâle et coiffe la collerette 5, l'espace entre le profilé 37 et la collerette 5 pouvant être pourvu d'un remplissage approprié.

A la Fig. 5, le profilé annulaire 37 est remplacé par un deuxième tore 38 coincé entre le bout mâle 3 et le pan coupé 35ª de la collerette 5. Ce tore 38 est retenu contre la collerette 5 par plusieurs pattes coudées 39 en tôle fixées 1a sa face extérieure de cette dernière.

Ces deux variantes ont le même mode de fonctionnement que les deux précédentes. Cependant, il est nécessaire de refermer les fentes 36ª, 38ª et 37ª des tores 36, 38 et du profilé 37 avant le remplissage de l'espace 26 pour assurer l'étanchéité, sauf bien entendu pour les deux tores s'ils sont réalisés en une matière extensible telle qu'un élastomère. Dans un tel cas, si l'on referme la fente 22ª du jonc 22, on peut obtenir un espace 26 parfaitement étanche et envisager de remplir cet espace d'un liquide.

Dans les joints des Fig. 1 à 3, il se peut que, par suite de frottements, la déviation des tuyaux n'entraîne pas automatiquement le basculement complet de la couronne 23 par rapport à l'emboîtement et qu'en conséquence le contact entre cette couronne et le jonc 22 ne soit pas assuré sur toute la périphérie. Pour éviter cet incident, comme représenté en traits mixtes à la Fig. 3, la collerette 5 fermant l'emboîtement peut présenter un certain nombre de trous axiaux taraudés 40 à travers lesquels passent des vis 41. Le vissage de ces vis, une fois les deux tuyaux dans leur position définitive, permet de pousser la pièce 23 jusqu'à ce qu'elle ait un contact périphérique continu avec le jonc 22. On peut alors ou bien laisser en place les vis 41, si on ne craint pas qu'elles s'opposent au remplissage des billes par le trou 28, ou bien retirer ces vis, soit de façon qu'elles ne fassent plus saillie dans l'espace 26, soit complètement, auquel cas on les remplace par des bouchons.

Ce dispositif auxiliaire 40-41 de mise de la couronne 23 en appui correct sur le jonc 22 peut également s'appliquer à la mise en place du tore 36 des Fig. 4 et 5.

Dans tous les cas où la matière 27 reste fluide, ce qui est le cas des billes métalliques, on peut espérer que si les tuyaux se déplacent accidentellement, par exemple à la suite d'un affaissement de terrain, cette matière effectue automatiquement, au moins partiellement, une redistribution périphérique restaurant l'appui effectif sur tout le pourtour du joint.

Dans chacun des modes de réalisation représentés, la face radiale 21 contre laquelle prend appui le jonc 22 peut s'obtenir de différentes façons. Par exemple, elle peut appartenir à un jonc fendu de section rectangulaire ou carrée logé dans une gorge également à section rectangulaire creusée dans la surface extérieure du bout mâle 3. Cette surface d'appui 21 peut également être constituée par un flanc d'un relief venu de matière avec le bout mâle, ou encore constituer la tranche d'extrémité d'une manchette collée sur le bout mâle et munie, à son extrémité opposée à la pointe de ce bout mâle, d'un talon radial. Il est à noter que toutes les variantes de joncs représentées peuvent indifféremment être utilisées quel que soit le type du joint. Bien entendu, dans chaque cas, l'emboîtement et le bout mâle peuvent appartenir à n'importe quel type d'élément de canalisation autres que des tuyaux proprement dits.

**Revendications**

1. Joint verrouillé à emboîtement entre deux tuyaux (2-4) pouvant présenter une déviation l'un par rapport à l'autre, dans lequel le bout mâle (3) et l'emboîtement (1) présentent des surfaces d'appui respectives en regard (7-30), entre lesquelles sont disposés des moyens d'entretoisement (23-24-25-27-36-37-38-39) capables de transmettre les efforts de déboîtement sur toute la périphérie du joint et comprenant une masse incompressible et déformable (27), la surface d'appui (7) de l'emboîtement (1) étant définie par une collerette (5) intérieure de celui-ci, et celle (30) du bout mâle (3) par un jonc annulaire fendu (22) enserrant ce bout mâle et appliqué contre un épaulement radial (20) de celui-ci, ce joint étant caractérisé en ce que la masse incompressible et déformable est une masse de billes (27) contenue dans un espace fermé de tous côtés de façon étanche à ladite matière par des organes annulaires (23-36-37-38) comportant au moins une partie annulaire en protubérance radiale par rapport au jonc annulaire fendu (22) de verrouillage, ladite partie en protubérance radiale étant située entre les deux surfaces d'appui (7-30).

2. Joint suivant la revendication 1, caractérisé en ce que la masse de billes métalliques (27) est enfermée dans un espace annulaire (26) de la cavité de l'emboîtement (1) entre des parois cylindriques interne et externe (14-25-4) et des parois radiales d'appui axial appartenant d'une part à l'emboîtement (1) et d'autre part à une pièce annulaire d'appui (23-36-37-38), ledit espace annulaire (26) ainsi empli constituant une capacité déformable, alors qu'un autre espace annulaire, séparé d'une garniture d'étanchéité (18) par une cloison radiale interne (9) reste vide entre ledit espace annulaire (26) empli de billes et ladite garniture d'étanchéité (18), ladite capacité déformable emplie d'une masse de billes (27) prenant appui par ladite pièce annulaire (23-36-37-38) sur le jonc annulaire fendu (22).

3. Joint suivant les revendications 1 et 2, caractérisé en ce que lesdits organes annulaires comprennent une couronne (23) à section en L coulissant avec un jeu radial (j, j') dans l'ouverture (8) de la collerette (5) de l'emboîtement (1) et dans le fond cylindrique (14) de la cavité (13) de cet emboîtement (1).

4. Joint suivant la revendication 2, caractérisé en ce que la surface d'appui du bout mâle (3) est radiale ainsi que la surface de la couronne (23) en appui sur cette surface, et en ce que le jeu (j, j') de la couronne (23) permet à celle-ci de dévier angulairement par rapport à l'emboîtement (1) d'un angle égal à la déviation maximale admise pour les deux tuyaux (2, 4).

5. Joint suivant la revendication 2, caractérisé en ce que la surface d'appui (30) du bout mâle (3) est tombée tandis que la surface (35) de la couronne (23) en contact avec cette surface d'appui (30) est tronconique.

6. Joint suivant l'une quelconque des revendications 2 à 5, caractérisé en ce que la branche (25) de la couronne en L (23) sortant de l'emboîtement (1) se termine par une collerette radiale (25a) tournée vers l'extérieur.

7. Joint suivant les revendications 1 et 2, caractérisé en ce que la surface d'appui (30) du bout mâle (3) est tronconique ou sphérique et en ce que ledit espace annulaire (26) empli de la masse incompressible et déformable (27) est fermé du côté du joint annulaire fendu (22) par un anneau torique (36) en appui sur ce jonc (22) et sur le fond cylindrique (14) de la cavité (13) de l'emboîtement (1).

8. Joint suivant la revendication 2, caractérisé en ce que ledit espace annulaire (26) est fermé du côté de l'entrée de l'emboîtement (1) par un profilé annulaire (37) en U coiffant ladite collerette (5), l'espace entre le profilé (37) et la collerette (5) pouvant être muni d'un remplissage.

9. Joint suivant la revendication 2, caractérisé en ce que ledit espace annulaire (26) est fermé du côté de l'entrée de l'emboîtement (1) par un second anneau torique (38) s'appuyant sur la surface extérieure du bout mâle (3) et sur une partie tronconique (35a), radialement intérieure, de la surface d'appui (7) de l'emboîtement (1), ledit second anneau torique (38) étant en outre retenu contre la collerette (5) d'entrée d'emboîtement par plusieurs pattes coudées (39) fixées à la face extérieure de cette dernière.

10. Joint suivant l'une quelconque des revendications 1 à 9, caractérisé en ce que la collerette (5) de l'emboîtement (1) est percée d'une série de trous axiaux taraudés (40) dans lesquels peuvent être engagées des vis (41) de poussée du ou des organes annulaires (23, 36) destinés à s'appuyer sur la surface d'appui du bout mâle (3).

**Claims**

1. Locked joint to be fitted between two pipes (2-4) which may not be aligned one with respect to the other, in which the male end (3) and the mouth end (1) comprise respective opposite bearing surfaces (7-30), between which are arranged bracing means (23-24-25-27-36-37-38-39) capable of transmitting tensile forces over the entire periphery of the joint and comprising an incompressible and deformable mass (27), the bearing surface (7) of the mouth end (1) being defined by a flange (5) inside the latter and the bearing surface (30) of the male end (3) being defined by a split annular ring (22) encircling this male end and bearing against a radial shoulder (20) of the latter, this joint being characterised in that the incompressible and deformable mass is a mass of balls (27) contained in a space closed on all sides in a sealed manner with respect to said material by annular members (23-36-37-38) comprising at least one annular part projecting radially with respect to the split annular locking ring (22), said part projecting radially being located between the two bearing surfaces (7-30).

2. Joint according to claim 1, characterised in that the mass of metal balls (27) is enclosed in an annular space (26) in the cavity of the mouth end (1) between inner and outer cylindrical walls (14-25-4) and radial walls for axial support belonging on the one hand to the mouth end (1) and on the other hand to an annular support part (23-36-37-38), said annular space (26) filled in this way constituting a deformable enclosure, whereas another annular space, separated from a gasket (18) by an internal radial partition (9) remains empty between said annular space (26) filled with balls and said gasket (18), said deformable enclosure filled with a mass of balls (27) bearing by said annular part (23-36-37-38) on the split annular ring (22).

3. Joint according to claims 1 and 2, characterised in that said annular members comprise an L-section ring (23) sliding with a radial clearance (j, j') in the opening (8) of the flange (5) of the mouth end (1) and in the cylindrical bottom (14) of the cavity (13) of this mouth (1).

4. Joint according to claim 2, characterised in that the bearing surface of the male end (3) is radial just as the surface of the ring (23) bearing on this surface and in that the clearance (j, j') of the ring (23) enables the latter to deviate in an angular manner with respect to the mouth end (1) by an angle equal to the maximum deviation allowed for the two pipes (2, 4).

5. Joint according to claim 2, characterised in that the bearing surface (30) of the male end (3) is convex whereas the surface (35) of the ring (23) in contact with this bearing surface (30) is truncated.

6. Joint according to one of claims 2 to 5, characterised in that the side (25) of the L-section ring (23) leaving the mouth end (1) terminates in a radial flange (25a) which is turned outwards.

7. Joint according to claims 1 and 2, characterised in that the bearing surface (30) of the male end (3) is truncated or spherical and in that said annular space (26) filled with the incompressible and deformable mass (27) is closed adjacent the split annular ring (22) by a toroidal ring (36) bearing on this ring (22) and on the cylindrical bottom (14) of the cavity (13) of the mouth (1).

8. Joint according to claim 2, characterised in that said annular space (26) is closed adjacent the entrance of the mouth (1) by an annular U-shaped profile (37) covering said flange (5), the space between the profile (37) and the flange (5) being able to be filled with a filler material.

9. Joint according to claim 2, characterised in that the said annular space (26) is closed adjacent the entrance of the mouth (1) by a second toroidal ring (38) bearing on the outer surface of the male end (3) and on a radially inner truncated part (35a) of the bearing surface (7) of the mouth (1), said second toroidal ring (38) also being retained against the inlet flange (5) of the mouth by several bent claws (39) fixed to the outer face of the latter.

10. Joint according to one of claims 1 to 9, characterised in that the flange (5) of the mouth (1) is provided with a series of threaded axial holes (40) in which may be engaged set screws (41) of the annular member or members (23, 36) intended to rest on the bearing surface of the male end (3).

## Ansprüche

1. Verriegelte Muffenverbindung zwischen zwei bezüglich einander gegebenenfalls eine Abwinklung aufweisenden Rohren (2-4), in der das Einsteckende (3) und die Muffe (1) einander gegenüberstehende Abstützflächen (7-30) aufweisen, zwischen denen die Rohre auseinanderdrückende Kräfte über den gesamten Umfang der Verbindung übertragende Versteifungsmittel (23-24-25-27-36-37-38-39) angeordnet sind, und mit einer inkompressiblen und deformierbaren Masse (27), wobei die Abstützfläche (7) der Muffe (1) durch einen Innenbund (5) derselben und die (30) des Einsteckendes (3) durch einen geschlitzten, das Einsteckende umschließenden und gegen eine radiale Schulter (20) derselben anliegenden Federring (22) gebildet ist, dadurch gekennzeichnet, daß die inkompressible und deformierbare Masse aus einer Masse (27) aus kleinen Kugeln in einem Raum besteht, der allseitig gegen diese Masse dicht durch ringförmige Organe (23-36-37-38) abgeschlossen ist, die wenigstens einen einen radialen Vorsprung bezüglich des geschlitzten Federringes (22) aufweisenden ringförmigen Teil aufweisen, dessen radialer Vorsprung sich zwischen den beiden Abstützflächen (7-30) befindet.

2. Verbindung nach Anspruch 1, dadurch gekennzeichnet, daß die Masse (27) aus kleinen metallischen Kugel in einem Ringraum (26) des Hohlraumes der Muffe (1) zwischen inneren und äußeren zylindrischen Wänden (14-25-4) und radialen Wänden der axialen Abstützung einerseits an der Muffe (1) und andererseits an einem ringförmigen Abstützstück (23-36-37-38) eingeschlossen ist und dieser so gefüllte Ringraum (26) einen deformierbaren Hohlraum bildet, während ein anderer, von einer Dichtungsgarnitur (18) durch eine innere radiale Trennwand (9) getrennter Ringraum zwischen dem mit den kleinen Kugeln gefüllten Ringraum und der Dichtungsgarnitur (18) leer bleibt, wobei der mit einer Masse (27) aus kleinen Kugeln gefüllte deformierbare Hohlraum sich über das ringförmige Teil (23-36-37-38) auf dem geschlitzten Federring (22) abstützt.

3. Verbindung nach Anspruch 1 und 2, dadurch gekennzeichnet, daß die ringförmigen Organe eine Kranzleiste (23) mit L-förmigem Querschnitt umfassen, die mit Radialspiel (j, j') in der Öffnung (8) des Bundes (5) der Muffe (1) und im zylindrischen Boden (14) des Inneren (13) dieser Muffe gleitet.

4. Verbindung nach Anspruch 2, dadurch gekennzeichnet, daß die Abstützfläche des Einsteckendes (3) genauso wie die Oberfläche der sich gegen diese Fläche abstützenden Kranzleiste (23) radial verläuft und daß das Spiel (j, j') der Kranzleiste (23) so gewählt ist, daß eine Winkelabweichung bezüglich der Muffe (1) um einen Winkel herbeiführbar ist, der gleich der für die beiden Rohre (2, 4) maximal möglichen Abweichung ist.

5. Verbindung nach Anspruch 2, dadurch gekennzeichnet, daß die Abstützfläche (30) des Einsteckendes (3) gewölbt ist, während die Oberfläche (35) der mit dieser Abstützfläche (30) in Kontakt kommenden Kranzleiste (23) kegelstumpfförmig ausgebildet ist.

6. Verbindung nach einem der Ansprüche 2 bis 5, dadurch gekennzeichnet, daß der aus der Muffe (1) austretende Schenkel (25) der L-förmigen Kranzleiste (23) in einem nach außen gerichteten Radialbund (25a) endet.

7. Verbindung nach Anspruch 1 und 2, dadurch gekennzeichnet, daß die Abstützfläche (30) des Einsteckendes (3) kegelstumpfförmig oder sphärisch ausgebildet ist und daß der mit der inkompressiblen und deformierbaren Masse (27) gefüllte Ringraum (26) auf der Seite des geschlitzten Federrings (22) durch einen torischen Ring (36) abgeschlossen ist, der sich gegen den Federring und gegen den zylindrischen Boden (14) des Inneren (13) der Muffe (1) abstützt.

8. Verbindung nach Anspruch 2, dadurch gekennzeichnet, daß der Ringraum (26) auf der Eintrittsseite der Muffe (1) durch ein U-förmiges Ringprofil (37) abgeschlossen ist, das den Bund (5) abdeckt, wobei der Raum zwischen dem Profil (37) und dem Bund (5) mit einer Füllung versehen sein kann.

9. Verbindung nach Anspruch 2, dadurch gekennzeichnet, daß der Ringraum (26) auf der Eintrittsseite der Muffe (1) durch einen zweiten torischen Ring (38) verschlossen ist, der sich gegen die Außenfläche des Einsteckendes (3) und gegen einen radial innen gelegenen konischen Teil (35) der Abstützfläche (7) der Muffe (1) abstützt, wobei der zweite torische Ring (38) außerdem gegen den Bund (5) auf der Eintrittsseite der Muffe durch Winkelpratzen (39) gehalten ist, die an dessen Außenfläche fixiert sind.

10. Verbindung nach einem der Ansprüche 1 bis 9, dadurch gekennzeichnet, daß der Bund (5) der Muffe (1) von einer Reihe axialer Gewindelöcher (40) durchbohrt ist, in welche Schrauben (41) einschraubbar sind, die auf das oder die Ringorgan(e) (23, 26) drücken, die sich gegen die Abstützfläche des Einsteckendes (3) abstützen.

FIG.1

0 011 187

0 011 187

FIG_2

FIG_3

FIG_4

FIG_5